# EUROPEAN PATENT SPECIFICATION

(11) **EP 4 513 046 B1**
(45) Date of publication and mention of the grant of the patent: **13.05.2026**
(21) Application number: 24195650.7
(22) Date of filing: 21.08.2024
(51) Int. Cl.: F16C 11/06, F16C 33/08, F16C 33/58, F16C 35/02, F16C 35/067

(54) **BALL JOINT END**
KUGELGELENKENDE
EXTRÉMITÉ DE ROTULE

(30) Priority: 25.08.2023 IT 202300017616
(43) Date of publication of application: 26.02.2025
(73) Proprietor: MME Next Holding Srl, 41042 Fiorano Modenese (MO) (IT)
(72) Inventor: RAVAZZINI, Mauro, 41042 Fiorano Modenese (MO) (IT); RAVAZZINI, Marco, 41042 Fiorano Modenese (MO) (IT)
(74) Representative: Luppi Intellectual Property S.r.l.

(56) References cited:
- US-A- 4 560 325
- US-A1- 2002 095 790
- US-A1- 2013 114 996
- US-A1- 2018 216 659
- US-B2- 11 280 218

## Description

The invention relates to a ball joint end, in particular of the type used at the ends of hydraulic or pneumatic pistons, for example used in cranes or other lifting means.

### Background of the invention

Joint ends are known comprising a housing body that has a seat in which a bearing is housed, for example a ball joint. The bearing is locked axially inside the housing body by elastic rings, this enables the bearing to withstand axial loads, preventing the bearing from slipping out. In these joint ends, the thickness of the housing body has sufficient dimensions to enable elastic rings to be fitted abutting on the flat side faces of the outer ring of the bearing. A ball joint end of this type is disclosed, for example, in US 2018/0216659.

Nevertheless, in some joint ends of known type, in which the thickness of the housing body is equal to or a little greater than the thickness of the outer ring of the bearing, it is not possible to lock the bearing axially inside the housing body by elastic rings because there is not sufficient space to enable the elastic rings to be fitted. In these joint ends without elastic rings, in order to lock the bearing in the housing body, coupling is performed by interference by pressing the bearing inside the seat of the housing body.

Although the joint ends without elastic rings solve the problem of how to use joint ends with reduced overall dimensions, they have various limits and drawbacks.

One drawback of joint ends without elastic rings of known type is due to the reduced reliability. In fact, such joint ends are often subject to the bearing slipping out because of the cyclical loads applied that can cause the bearing to exit the housing seat.

One further drawback of the joint ends without elastic rings of known type is the reduced loads that joint ends without elastic rings can bear. In fact, owing to the coupling with interference, a heavy load can deform plastically the housing body with resulting slipping out of the bearing. As a result, it is necessary to work with reduced loads to avoid this drawback.

In the light of what has been set out above, it is desirable to improve the ball joint ends of reduced thickness, i.e. with a dimension of the housing body that is the same as or little greater than the dimension of the outer ring of the bearing, making the ball joint ends more reliable and performant.

### Summary of the invention

The object of this invention is to improve current ball joint ends with reduced thickness, i.e. with thickness of the housing body the same as or little greater than the dimension of the outer ring of the bearing, so as to overcome the drawbacks of the prior art.

Another object is to provide a ball joint end with reduced thickness that is reliable and in which axial slipping out of the bearing from the seat is prevented.

A further object is to provide a ball joint end with reduced thickness that is resistant to greater loads than those applied to known j oint ends, wherein deformation of the j oint end does not entail axial slipping out of the bearing.

Such objects and still others are achieved by a ball joint end as specified in the first claim attached to the present description.

### Brief description of the drawings

The invention can be better understood with reference to the appended drawings that illustrate an embodiment thereof by way of non-limiting example in which:

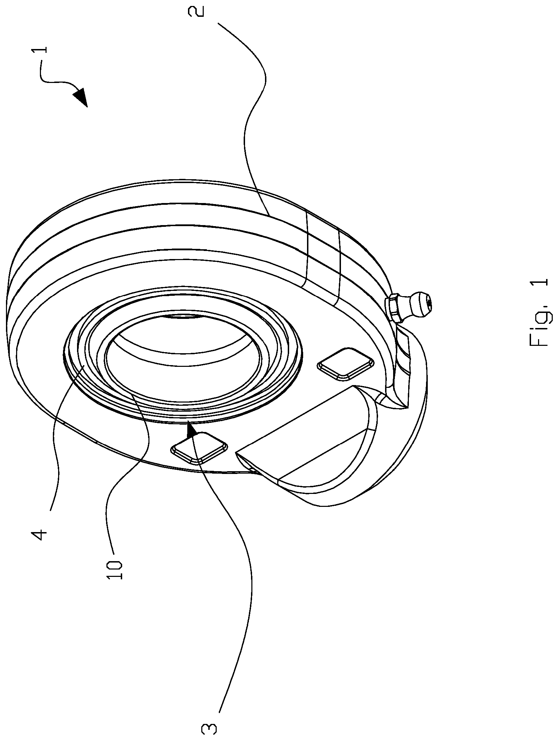

Figure 1 is a perspective view of a ball joint end according to the invention;
Figure 2 is a vertical elevation front view of the ball joint end of figure 1;
Figure 3 is a section view taken along the axis III-III of figure 2;

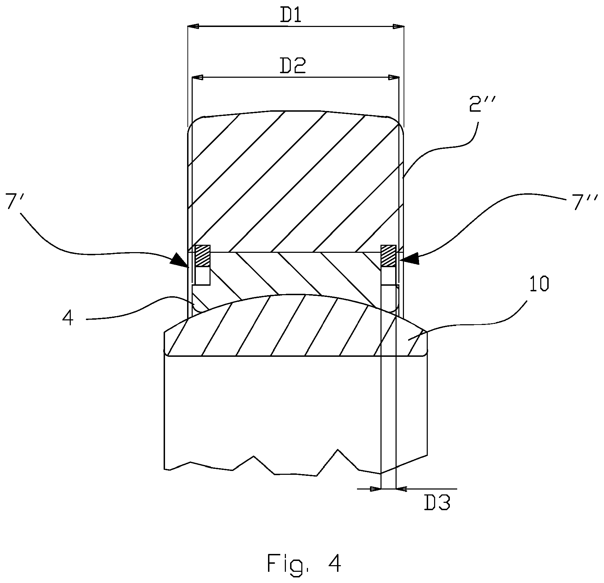

Figure 4 shows an enlarged detail of figure 3;

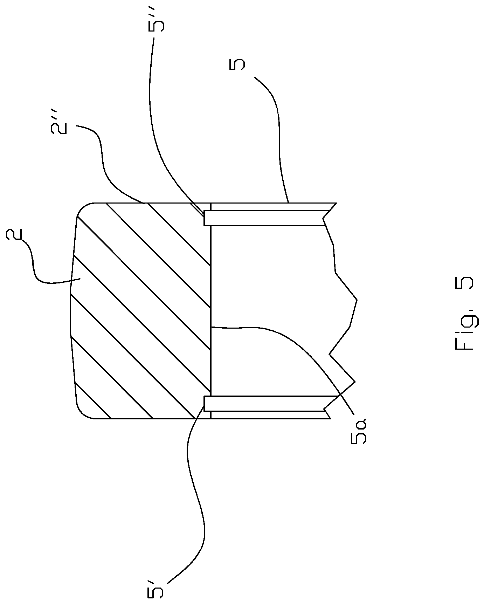

Figure 5 shows the enlarged detail of figure 4 in which some components have been removed to show others better;

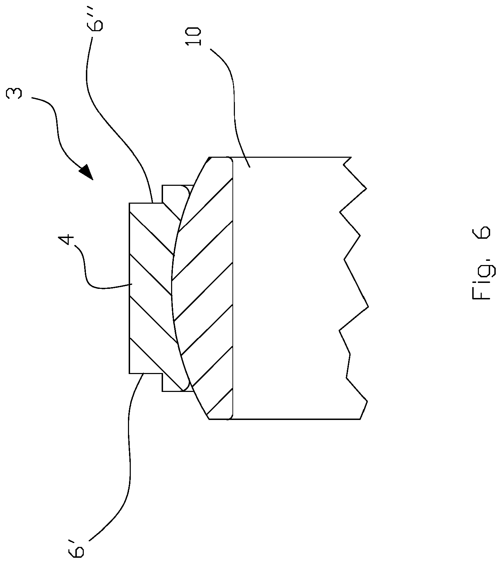

Figure 6 shows the enlarged detail of figure 4 in which some components have been removed to show others better;
Figure 7 shows a partially sectioned side vertical elevation view of a ball joint end according to the invention;

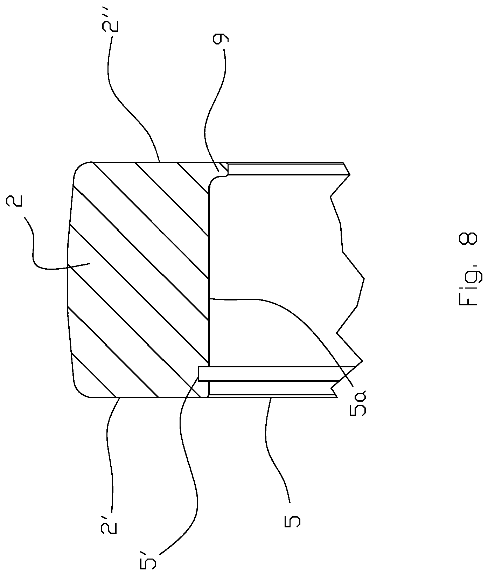

Figure 8 shows an enlarged detail of figure 7 in which some components have been removed to show others better.

### Detailed description of the invention

According to this invention, a ball joint end 1 is disclosed, in particular of the type used at the ends of hydraulic or pneumatic pistons, for example used in cranes or other lifting means.

The ball joint end 1 comprises a housing body 2, in particular of the eyelet type.

The ball joint end 1 comprises a bearing 3, in particular of the radial ball joint type. The bearing 3 is fitted in the housing body 2.

The housing body 2 is provided with a through housing hole 5.

The housing hole 5 is of a substantially cylindrical shape and comprises an inner wall 5a of a substantially cylindrical shape.

The housing body 2 comprises a first face 2' and a second face 2". The first face 2' and the second face 2" are opposite one another and extend on planes that are distinct from one another. These planes are substantially perpendicular to an axis of symmetry A of the housing hole 5. In other words, the housing hole 5 is obtained on the housing body 2 and traverses, according to a substantially perpendicular direction, the first face 2' and the second face 2".

The bearing 3 is fitted in the housing hole 5 of the housing body 2.

The housing body 2 is provided with a radial groove 5' obtained on the inner wall 5a. The groove 5' extends radially inside the housing hole 5, in particular the groove 5' is a radial internal groove on the inner wall 5a. The groove 5' is arranged nearer the first face 2' with respect to the second face 2" of the housing body. The groove 5' is provided with a first inner surface and a second inner surface. These inner surfaces are substantially parallel to the first face 2' and transverse to the axis of symmetry A of the housing hole 5. The first inner surface is arranged nearer the first face 2' with respect to the second inner surface of the groove 5'.

The groove 5' is intended to house an elastic ring 8', as will be explained in greater detail below.

In particular, a radial section of the groove 5' is substantially U-shaped.

Depending on specific needs, the radial section of the groove 5' can have a V, a C, or another shape.

The bearing 3 comprises an outer ring 4 and an inner ring 10. The outer ring 4 is fixed. The inner ring 10 rotates around a rotation axis of the bearing 4. The rotation axis of the bearing can be substantially parallel to the axis of symmetry A of the housing hole 5.

The bearing 3 can be a ball joint, in particular a radial ball joint in which the inner ring 10 has an outer spherical surface, whereas the outer ring 4 can have an inner concave surface that couples with the outer spherical surface of the inner ring 10. The conformation of these surfaces enables the rotation axis of the bearing to take different positions, in particular positions that are transverse to the axis of symmetry A of the housing hole 5.

The outer ring 4 is housed in the housing hole 5 and comprises an outer surface facing the inner wall 5a of the housing hole 5.

The outer ring 4 can have a thickness D2, measured according to a direction parallel to the axis of symmetry A of the housing hole 5, substantially equal to a thickness D1 of the housing body 2, which is also measured in said direction parallel to said axis of symmetry A. The phrase "substantially equal" means that D1=D2, unless machining tolerances. Alternatively, the outer ring 4 has a thickness D2 that differs from the thickness D1 of the housing body 2 by a quantity less than a thickness D3 of the elastic ring 8', i.e. D1-D2<D3.

The outer ring 4 comprises a shoulder 6'. A radial section of the shoulder 6' is substantially L-shaped. The shoulder 6' is provided with a shoulder surface that extends on a plane substantially parallel to the first face 2' and with a transverse surface that extends on a plane transverse, in particular perpendicular, to the shoulder surface.

The shoulder 6' is aligned radially with the groove 5'. In particular, the shoulder surface is aligned on the second inner surface of the groove 5'.

The shoulder 6' and the groove 5' form a seat 7' configured to receive the elastic ring 8'. The elastic ring 8' is fitted in the seat 7' to stop a movement of the bearing 3 along a direction substantially parallel to the axis of symmetry of the housing hole 5. In particular, the elastic ring 8' is fitted in the seat 7' so as to abut against the shoulder surface and the second inner surface of the groove 5'.

The distance between the first inner surface and the second inner surface of the groove, measured along a direction substantially parallel to the axis of symmetry of the housing hole 5, is greater than or equal to the thickness D3 of the elastic ring 8'.

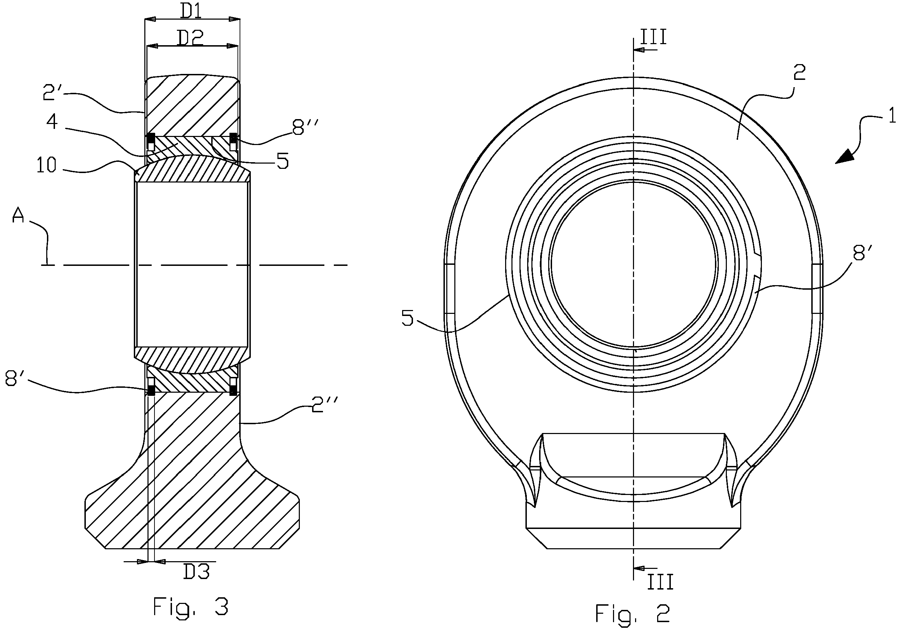

According to a first embodiment, as illustrated in figure 3, the housing body 2 is provided with a further radial groove 5" obtained on the inner wall 5a. The further groove 5" extends radially inside the housing hole 5, in particular the further groove 5" is a radial internal groove on the inner wall 5a.

The further groove 5" is arranged nearer the second face 2" than the first face 2' of the housing body. The further groove 5" is provided with a first inner surface and a second inner surface. Such inner surfaces are substantially parallel to the second face 2" and extend on planes transverse to the axis of symmetry of the housing hole 5. The first inner surface of the further groove 5" is arranged nearer the second face 2" than the second inner surface of the further groove 5".

In particular, a radial section of the further groove 5" is substantially U-shaped.

On the basis of specific needs, the radial section of the further groove 5" can have a V, C, or other shape.

Also, according to the first embodiment, the outer ring 4 comprises a further shoulder 6". A radial section of the further shoulder 6" is substantially L-shaped. The further shoulder 6" is provided with a further shoulder surface that extends on a plane substantially parallel to the second face 2" and of a further transverse surface that extends on a plane transverse, in particular perpendicular, to the further shoulder surface.

The further shoulder 6" is aligned radially with the further groove 5". In particular, the further shoulder surface is aligned on the second inner surface of the further groove 5''.

The further shoulder 6" and the further groove 5" form a further seat 7" configured to receive a further elastic ring 8", substantially equal to the elastic ring 8'. The phrase "substantially equal", means that the elastic ring 8' and the further elastic ring 8" have the same shape and dimensions, unless machining tolerances. The further elastic ring 8" is fitted in the further seat 7" to stop a movement of the bearing 3 along a direction substantially parallel to the axis of symmetry A of the housing hole 5. In particular, the further elastic ring 8" is fitted in the further seat 7" so as to abut against the further shoulder surface and the second inner surface of the further groove 5".

The distance between the first inner surface and the second inner surface of the further groove 5", measured along a direction substantially parallel to the axis of symmetry of the housing hole 5, is greater than or equal to the thickness of the further elastic ring 8".

The elastic ring 8' and the further elastic ring 8" comprise a Seeger type ring.

In the first embodiment, the combined action of the elastic ring 8' and of the further elastic ring 8" on the outer ring 4 prevents the bearing 3 moving in a direction substantially parallel to the axis of symmetry A of the housing hole 5.

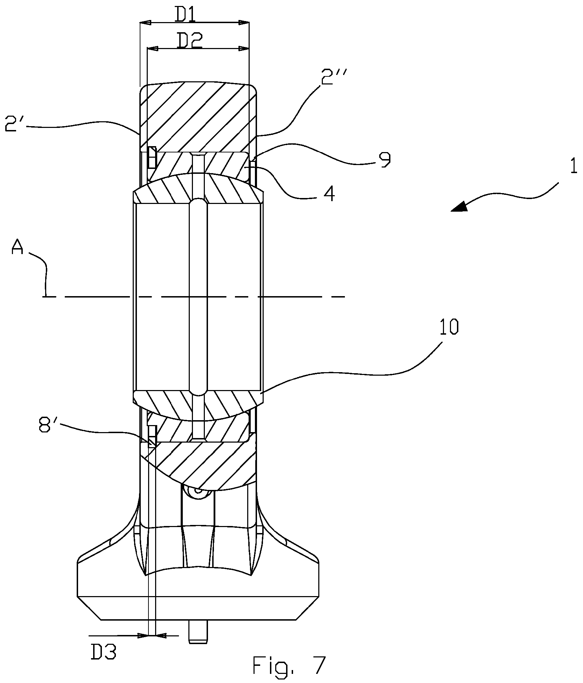

In a second embodiment, illustrated in figure 7, the ball joint end 1, in particular the housing body 2, comprises an abutment portion 9. The abutment portion 9 protrudes radially from the housing hole 5 near the second face 2". In other words, the abutment portion 9 reduces the diameter of the housing hole 5 near the second face 2".

The abutment portion 9 is configured to receive in abutment the outer ring 4. The abutment portion 9 receives in abutment a surface of the outer ring 4 that is transverse to the axis of symmetry A of the housing hole 5, nearer the second face 2" of the housing body 2 than the first face 2'. More in detail, the abutment portion 9 has an abutment surface that faces the transverse surface of the outer ring 4.

In the second embodiment, the movement of the bearing 3 along a direction substantially parallel to the axis of symmetry A of the housing hole 5 is locked by the action exerted by the elastic ring 8' and by the abutment portion 9 on the bearing 3, in particular on the outer ring 4 of the bearing 3.

In the light of what has been set out above it is clear that the ball joint end according to this invention achieves the set objects.

In fact, the particular conformation of the ball joint end according to this invention, in particular the presence of the shoulder on the outer ring of the bearing, enables the elastic ring also to be fitted in joint ends that have a reduced thickness D1 of the housing body, i.e. substantially equal to or slightly greater than the thickness D2 of the outer ring 4 of the bearing 3, preventing slipping out of the bearing from the housing seat even following axial loads applied cyclically.

The phrase "slightly greater", means that the thickness D1 of the housing body 2 exceeds the thickness D2 of the outer ring 4 of the bearing 3 by a quantity less than the thickness D3 of the elastic ring 8' or 8", as specified previously.

Further, the ball joint end with reduced thickness of the housing body according to this invention withstands higher loads than those applicable to the known joint ends of reduced dimensions, owing to the presence of the elastic ring that, also following deformation of the joint end, does not allow axial slipping out of the bearing.

## Claims

1. Ball joint end comprising a housing body (2) and a bearing (3) comprising an outer ring (4) housed in a through housing hole (5) in said housing body (2), wherein said housing body (2) comprises a radial groove (5') obtained on an inner wall (5a) of said housing hole (5) and arranged nearer a first face (2') than a second face (2") of said housing body (2), said first face (2') and said second face (2") being opposite one another and extending on distinct planes substantially perpendicular to an axis of symmetry (A) of said housing hole (5),
**characterised in that** said outer ring (4) comprises a shoulder (6') aligned radially with said groove (5') to form a seat (7') configured to receive an elastic ring (8').

2. Ball joint end according to claim 1, wherein the outer ring (4) has a thickness D2, measured according to a direction parallel to the axis of symmetry (A) of the housing hole (5), substantially equal to a thickness D1 of the housing body (2), which is also measured in said direction parallel to said axis of symmetry (A), or the outer ring (4) has a thickness D2 that differs from the thickness D1 of the housing body (2) by a quantity less than a thickness D3 of the elastic ring 8', in which D1-D2<D3.

3. Ball joint end (1) according to claim 1, comprising a further radial groove (5") obtained on said inner wall (5a) and arranged nearer said second face (2"), said outer ring (4) comprising a further shoulder (6") aligned radially with said further groove (5") to form a further seat (7") configured to receive a further elastic ring (8").

4. Ball joint end (1) according to claim 1, comprising an abutment portion (9) protruding radially from said housing hole (5) near said second face (2"), said abutment portion (9) being configured to receive in abutment said outer ring (4).

5. Ball joint end (1) according to any one of the preceding claims, wherein in said seat (7') the elastic ring (8') is fitted to stop a movement of said bearing (3) along a direction substantially parallel to the axis of symmetry (A) of said housing hole (5).

6. Ball joint end (1) according to claim 5 as appended to claim 3, wherein in said further seat (7") the further elastic ring (8") is fitted to stop a movement of said bearing (3) along a direction substantially parallel to the axis of symmetry (A) of said housing hole (5).

7. Ball joint end (1) according to any one of the preceding claims, wherein said bearing (3) is a radial ball joint.

## Patentansprüche

1. Kugelgelenkende, umfassend einen Gehäusekörper (2) und ein Lager (3), umfassend einen Außenring (4), der in einem durchgehenden Gehäuseloch (5) in dem Gehäusekörper (2) untergebracht ist, wobei der Gehäusekörper (2) eine radiale Nut (5') umfasst, die an einer Innenwand (5a) des Gehäuselochs (5) erhalten wird und näher zu einer ersten Fläche (2') als einer zweiten Fläche (2") des Gehäusekörpers (2) angeordnet ist, wobei die erste Fläche (2') und die zweite Fläche (2") einander gegenüberliegen und sich auf verschiedenen Ebenen erstrecken, die im Wesentlichen senkrecht zu einer Symmetrieachse (A) des Gehäuselochs (5) sind, **dadurch gekennzeichnet, dass** der Außenring (4) eine Schulter (6') umfasst, die mit der Nut (5') radial ausgerichtet ist, um einen Sitz (7') auszubilden, der konfiguriert ist, um einen elastischen Ring (8') aufzunehmen.

2. Kugelgelenkende nach Anspruch 1, wobei der Außenring (4) eine Dicke D2 aufweist, die gemäß einer Richtung parallel zu der Symmetrieachse (A) des Gehäuselochs (5) gemessen ist, das im Wesentlichen gleich einer Dicke D1 des Gehäusekörpers (2) ist, die ebenso in der Richtung parallel zu der Symmetrieachse (A) gemessen ist, oder der Außenring (4) eine Dicke D2 aufweist, die sich von der Dicke D1 des Gehäusekörpers (2) um eine Menge unterscheidet, die kleiner als eine Dicke D3 des elastischen Rings 8' ist, wobei D1-D2<D3.

3. Kugelgelenkende (1) nach Anspruch 1, umfassend eine weitere radiale Nut (5"), die an der Innenwand (5a) erhalten wird und näher zu der zweiten Fläche (2") angeordnet ist, der Außenring (4) umfassend eine weitere Schulter (6"), die mit der weiteren Nut (5") radial ausgerichtet ist, um einen weiteren Sitz (7") auszubilden, der konfiguriert ist, um einen weiteren elastischen Ring (8") aufzunehmen.

4. Kugelgelenkende (1) nach Anspruch 1, umfassend einen Anlageabschnitt (9), der von dem Gehäuseloch (5) nahe der zweiten Fläche (2") radial vorsteht, wobei der Anlageabschnitt (9) konfiguriert ist, um den Außenring (4) in Anlage aufzunehmen.

5. Kugelgelenkende (1) nach einem der vorstehenden Ansprüche, wobei in dem Sitz (7') der elastische Ring (8') eingesetzt ist, um eine Bewegung des Lagers (3) entlang einer Richtung im Wesentlichen parallel zu der Symmetrieachse (A) der Gehäusebohrung (5) zu stoppen.

6. Kugelgelenkende (1) nach Anspruch 5, wie zu Anspruch 3 beigelegt, wobei in dem weiteren Sitz (7") der weitere elastische Ring (8") eingesetzt ist, um eine Bewegung des Lagers (3) entlang einer Richtung im Wesentlichen parallel zu der Symmetrieachse (A) des Gehäuselochs (5) zu stoppen.

7. Kugelgelenkende (1) nach einem der vorstehenden Ansprüche, wobei das Lager (3) ein radiales Kugelgelenk ist.

## Revendications

1. Extrémité de joint à rotule comprenant un corps de boîtier (2) et un palier (3) comprenant une bague extérieure (4) logée dans un trou de boîtier traversant (5) dans ledit corps de boîtier (2), dans laquelle ledit corps de boîtier (2) comprend une rainure radiale (5') obtenue sur une paroi interne (5a) dudit trou de boîtier (5) et agencée plus près d'une première face (2') que d'une seconde face (2") dudit corps de boîtier (2), ladite première face (2') et ladite seconde face (2") étant opposées l'une à l'autre et s'étendant sur des plans distincts sensiblement perpendiculaires à un axe de symétrie (A) dudit trou de boîtier (5), **caractérisée en ce que** ladite bague extérieure (4) comprend un épaulement (6') aligné radialement avec ladite rainure (5') pour former un logement (7') conçu pour recevoir une bague élastique (8').

2. Extrémité de joint à rotule selon la revendication 1, dans laquelle la bague externe (4) a une épaisseur D2, mesurée selon une direction parallèle à l'axe de symétrie (A) du trou de boîtier (5), sensiblement égale à une épaisseur D1 du corps de boîtier (2), qui est également mesurée dans ladite direction parallèle audit axe de symétrie (A), ou la bague externe (4) a une épaisseur D2 qui diffère de l'épaisseur D1 du corps de boîtier (2) d'une quantité inférieure à une épaisseur D3 de la bague élastique 8', dans laquelle D1-D2<D3.

3. Extrémité de joint à rotule (1) selon la revendication 1, comprenant une rainure radiale supplémentaire (5") obtenue sur ladite paroi interne (5a) et agencée plus près de ladite seconde face (2"), ladite bague extérieure (4) comprenant un épaulement supplémentaire (6") aligné radialement sur ladite rainure supplémentaire (5") pour former un logement supplémentaire (7") conçu pour recevoir une bague élastique supplémentaire (8").

4. Extrémité de joint à rotule (1) selon la revendication 1, comprenant une partie de butée (9) faisant saillie radialement à partir dudit trou de boîtier (5) près de ladite seconde face (2"), ladite partie de butée (9) étant conçue pour recevoir en butée ladite bague externe (4).

5. Extrémité de joint à rotule (1) selon l'une quelconque des revendications précédentes, dans laquelle, dans ledit logement (7'), la bague élastique (8') est montée pour arrêter un mouvement dudit palier (3) le long d'une direction sensiblement parallèle à l'axe de symétrie (A) dudit trou de boîtier (5).

6. Extrémité de joint à rotule (1) selon la revendication 5 dépendant de la revendication 3, dans laquelle dans ledit logement supplémentaire (7"), la bague élastique supplémentaire (8") est montée pour arrêter un mouvement dudit palier (3) le long d'une direction sensiblement parallèle à l'axe de symétrie (A) dudit trou de boîtier (5).

7. Extrémité de joint à rotule (1) selon l'une quelconque des revendications précédentes, dans laquelle ledit palier (3) est un joint à rotule radial.
